# EUROPÄISCHE PATENTSCHRIFT

(11) **EP 1 630 975 B1**
(45) Veröffentlichungstag und Bekanntmachung des Hinweises auf die Patenterteilung: **18.11.2009**
(21) Anmeldenummer: 05106720.5
(22) Anmeldetag: 21.07.2005
(51) Int. Cl.: H04B 7/08

(54) **Rundfunkempfänger mit mindestens zwei Antennnen und zwei Empfängern für die Antennensignale**
Radio receiver having at least two antennas and at least two receivers for antenna signals
Récepteur radio comprenant au moins deux antennes et au moins deux récepteur pour les signaux des antennes

(30) Priorität: 26.08.2004 DE 102004041244
(43) Veröffentlichungstag der Anmeldung: 01.03.2006
(73) Patentinhaber: ROBERT BOSCH GMBH, 70442 Stuttgart (DE)
(72) Erfinder: Kottschlag, Gerhard, 31139, Hildesheim (DE); Wittig, Rainer, 31249, Hohenhameln (DE); Passoke, Jens, 30539, Hannover (DE)

(56) Entgegenhaltungen:
- EP-A- 1 150 442
- WO-A-02/03570
- DE-A1- 4 142 403
- JP-A- 60 248 026
- US-A1- 2003 017 833

## Beschreibung

Die Erfindung betrifft einen Rundfunkempfänger, insbesondere ein Autoradio, mit mindestens zwei Antennen und mindestens zwei Empfängern für Antennensignale.

Ein Empfänger für Kraftfahrzeuge gemäß dem Oberbegriff des Anspruchs 1 ist z.B. aus der DE 4142403 A1 bekannt.

Der mobile Empfang eines frequenzmodulierten (FM) Rundfunksignals mit einem FM-Rundfunkempfänger wird durch verschiedene Einflüsse gestört. Hierzu gehören unter anderem die Abschattung und der Mehrwegeempfang. Dabei wird im ersten Fall der Abschattung das zu empfangene Signal stark gedämpft, so dass die Antenne aus der entsprechenden Richtung keine elektromagnetische Welle empfangen kann. Im zweiten Fall des Mehrwegeempfangs überlagern sich die elektromagnetischen Wellen zweier Richtungen derart, dass es am Ort der Empfangsantenne zu einer starken Reduktion der Feldstärke bis hin zur Auslöschung kommt. Diese Effekte führen bei einem mobilen Rundfunkempfänger zu starken Beeinträchtigungen der Empfangsqualität.

Um diese Nachteile mobiler Rundfunkempfänger, die zum Beispiel als Autoradios in einem Kraftfahrzeug Einsatz finden, auszugleichen, werden in höherwertigen Empfangssystemen Schaltungen eingesetzt, bei denen die Signale zweier dekorrelierter Antennen unter anderem gefiltert, auf eine Zwischenfrequenz (ZF) umgesetzt und abgetastet werden. Anschließend werden die abgetasteten ZF-Signale mit komplexen Koeffizienten bewertet und addiert. Hierdurch kann die Empfangsperformance deutlich verbessert werden. Dieser Betriebsmodus wird im Folgenden DDA-Betrieb genannt.

Nachteilig bei diesem System ist der erhöhte Aufwand, da die Antennen und ein Teil des Signalpfades zweimal vorhanden sein müssen.

Falls eine solche Maßnahme zur Empfangsverbesserung auf Grund sehr guter Empfangsverhältnisse nicht notwendig ist, ist es bekannt, dass der zweite Empfangspfad im Hintergrund die Aufgabe übernimmt, den Empfang auf verschiedenen alternativen Frequenzen zu bewerten.

Hochwertige Empfangssystem bieten zudem die Möglichkeit des Empfangs von sogenannten Traffic-Massage-Channel-Daten (TMC) zur Übertragung von Verkehrsinformationen und zur Verkehrslenkung. Dabei soll der Empfang der TMC-Daten auf einer von der im Audiopfad eingestellten unabhängigen Frequenz möglich sein. Während einer der zwei Empfangspfade das Audiosignal liefert, kann die Aufgabe des TMC-Datenempfangs der zweite Empfangspfad übernehmen. Der die TMC-Daten empfangene Signalpfad kann ebenfalls die Senderlandschaft durch Auswertung der Radio-Daten-System-Informationen RDS beobachten, indem in Zeitschlitzen das Frequenzband gescannt wird, in denen keine TMC relevanten Daten empfangen werden. Hierfür sollte beiden Pfaden exakt das gleiche Signal zur Verfügung stehen. Wird eine bessere Alternativfrequenz empfangen, kann der das Audiosignal empfangende Empfänger (Tuner) ohne weitere Tests auf die entsprechende Frequenz springen.

Aufgabe der Erfindung ist es, einen verbesserten Rundfunkempfänger, insbesondere ein verbessertes Autoradio, mit mindestens zwei Antennen und mindestens zwei Empfängern für Antennensignale zu schaffen.

Die Aufgabe wird mit dem gattungsgemäßen Rundfunkempfänger mit den kennzeichnenden Merkmalen von Anspruch 1 gelöst.

Der erste Betriebsmodus entspricht somit einem Vorder-/Hintergrund-Empfang, bei dem zumindest für den Vordergrundempfänger zwischen zwei dekorrelierten Eingangssignalen umgeschaltet werden kann. Dieser Betriebsmodus ist vergleichbar mit einem herkömmlichen Antennendiversity-Betrieb. Im zweiten Betriebsmodus werden beiden Empfängern hingegen dekorrelierte Eingangssignale zugeführt, so dass ein DDA-Betrieb (Digital-Directional-Antenna = digital virtuell gerichtete Antenne) möglich ist.

Damit ist es mit einer einfachen Maßnahme möglich, dass einerseits beiden Empfängereingängen jeweils ein unkorreliertes Signal von den zwei dekorrelierten Antennensignalen zur Verfiigung gestellt wird und andererseits zumindest für einen Vordergrundempfänger eine Diversityempfang ermöglicht wird. Ein Hintergrundempfänger kann damit auf einfache Weise bspw. in Zeitschlitzen auf ein Antennensignal umschalten, das dem einen Vordergrundempfänger genutzten Antennensignal entspricht oder mit diesem korreliert ist.

Für den Fall einer Empfangsstörung beispielsweise durch Abschattung und Mehrwegeempfang, kann dann durch einen Mikrocontroller des Rundfunkempfängers gesteuert die Schalteinheit umschalten, um einen Vordergrundempfänger mit dem gleichen ungestörteren bzw. optimaleren Antenneneingangssignal zu versorgen.

Vorzugsweise ist ein Combiner zur komplexen Überlagerung von Antennensignalen vorgesehen, wobei die Schalteinheit mit den mindestens zwei Antennen, dem Combiner und den mindestens zwei Empfängern so verbunden ist, dass die Empfänger wahlweise mit aus mindestens zwei Antennensignalen gebildeten korrelierten überlagerten oder dekorrelierten Antennensignalen versorgt werden.

Die Combiner, auch als Koppler bekannt, können zum Beispiel kapazitiv, induktiv oder resistiv ausgeführt sein.

Die Antennensignale werden somit über ein Schaltwerk einem Combiner mit zwei Ein- und Ausgängen derart zugeführt, dass in einem Fall am Ausgang des Combiners zwei dekorrelierte Antennensignale vorliegen können und im zweiten Falle am Ausgang des Combiners zwei gleiche bzw. korrelierte Signale anliegen. Durch Betätigen des ersten Schalters ist ein Umschalten zwischen zwei Antennen möglich. Gleichermaßen kann die Schaltung auch auf mehr als zwei Antennen und/oder Empfänger erweitert werden.

In einer bevorzugten Ausführungsform hat die Schalteinheit eine Summierstufe mit einem Hochfrequenz-Combiner mit einer mit den Wicklungsenden an die Empfänger geschalteten Primärwicklung und einer Sekundärwicklung. Eine Antenne ist mit einem Zwischenabgriff der Primärwicklung verbunden und eine andere Antenne mit einem ersten Schalter abschaltbar mit einer Sekundärwicklung verbunden. Die Sekundärwicklung ist mit dem anderen Ende auf Massepotential gelegt.

Mit einem solchen Combiner kann die Antennensignaleinspeisung in den Empfänger optimiert werden. Für den Fall, dass mindestens eine andere Antenne abgeschaltet ist, verhält sich der offene hochohmige Eingang des an den Schalter geklemmten Endes der Sekundärwicklung in diesem Falle elektrisch neutral.

Wenn der Rundfunkempfänger im Phasendiversity- oder DDA-Modus betrieben werden soll, ist der Schalter immer geschlossen. Soll das Eingangssignale eines der Empfänger zwischen zwei verschiedenen möglichen Eingangssignalen in Abhängigkeit von der Signalqualität umgeschaltet werden, ist der Schalter entsprechend häufig zu betätigen. Ein kontinuierlicher DDA-Empfang ist dann nicht möglich.

Der erste Schalter ist vorzugsweise ein Umschalter, um wahlweise die erste oder zweite Antenne mit der Sekundärwicklung des Hochfrequenz-Combiners zu verbinden. Damit ist es möglich, dem Empfänger unkorrelierte Eingangssignale zur Verfiigung zu stellen, die sich jeweils aus mit unterschiedlichen komplexen Koeffizienten multiplizierten Antennensignale zusammensetzen. Dabei können die Antennensignale phasengleich oder gegenphasig je nach Schalterstellung addiert werden.

Weiterhin ist es vorteilhaft, einen zweiten Schalter zwischen der ersten Antenne und dem Zwischenabgriff der Primärwicklung des Hochfrequenz-Combiners vorzusehen. Damit kann die Versorgung der Empfänger wahlweise mit dem ersten oder zweiten Antennensignal gewählt werden.

Ein Signalteiler mit einem an ein erstes Wicklungsende der Primärwicklung des Hochfrequenz-Combiners geführten Zwischenabgriff kann vorgesehen werden, der mit einem dritten Schalter abschaltbar ist. Der dritte Schalter sollte dabei ein Umschalter sein, um wahlweise das zweite Wicklungsende der Primärwicklung des Hochfrequenz-Combiners oder den Signalteiler mit einem der Empfänger zu verbinden.

Auf diese Weise wird durch den Combiner ein zusätzliches virtuelles Antennensignal erzeugt, das sich aus der komplexen Überlagerung der originalen Antennensignale zusammensetzt, wobei zwischen dem virtuellen Antennensignal und den originalen Antennensignalen umgeschaltet werden kann.

Entsprechend können eine beliebige Anzahl von Empfängereingangssignale durch eine komplexe Überlagerung der originalen Antennensignale erzeugt werden, zwischen den umgeschaltet werden kann.

Besonders vorteilhaft ist es, wenn ein vierter Schalter an dem Zwischenabgriff des Signalteilers vorgesehen ist, um wahlweise das erste Wicklungsende oder das zweite Wicklungsende der Primärwicklung des Hochfrequenz-Combiners mit dem Zwischenabgriff des Signalteilers zu verbinden.

In einer anderen Ausführungsform ist ein zweiter Umschalter an einem Zwischenabgriff des Signalteilers vorgesehen, der mit einem zweiten Wicklungsende direkt an einen zweiten Empfänger und mit einem ersten Wicklungsende mit einem ersten Umschalter abschaltbar an einen ersten Empfänger angeschlossen ist. Der zweite Umschalter ist zum wahlweisen Verbinden des Zwischenabgriffs mit der ersten oder zweiten Antenne und der erste Umschalter zum wahlweisen Verbinden des ersten Empfängers mit dem Signalteiler oder einer der Antennen verschaltet.

Besonders vorteilhaft ist es, wenn in einer dritten Ausführungsform die Schalteinheit für mindestens eine der Antennen eine Mehrzahl von hintereinander geschalteten Phasenschiebern zur Verschiebung des Phase des Antennensignals der zugeordneten Antenne hat und eine Mehrzahl von Addieren und Schaltern vorgesehen sind, um wahlweise phasenverschobene Antennensignale einer Antenne mit Antennensignalen einer anderen Antenne zu überlagern. Damit wird ein flexibler Rundfunkempfänger mit einer beliebigen Anzahl von Empfängern und Antennen geschaffen, bei dem auf einfache Weise eine komplexe Linearkombination mehrerer Antennenausgangssignale möglich ist.

In jeder der vorgenannten Ausführungsform kann die Summierstufe zur Bildung Summenantennensignalen beispielsweise mit den Phasenbeziehungen von ϕ₁=0° und ϕ₂=180° aus den Antennensignalen einer ersten und zweiten Antenne ausgebildet sein. Beliebige Phasenbeziehungen zwischen den Antennensignalen einer beliebigen Anzahl von Antennen ist ebenfalls denkbar.

Dabei kann an einem oder mehreren Empfängereingängen zwischen einem Teil der Antennen oder allen Antennen umgeschaltet werden, wenn das Empfangssystem mit der komplexen Linearkombination der Anzahl von Empfängerausgangssignalen (ZF-Signale) arbeitet.

Der Rundfunkempfänger ist vorzugsweise beispielsweise über eine Mensch-Maschine-Schnittstelle (HMI = Human Machine Interface) zwischen den Betriebsmodi umschaltbar. Betriebsmodi sind beispielsweise der sogenannte DDA-Betrieb (Digital-Directional-Antenna) und der Vorder-/Hintergrundbetrieb, z. B. für den TMC-Empfang über einen anderen Kanal als der im Vordergrund empfangene Kanal. Dabei kann während des Vorder-/Hintergrundbetriebs mit mindestens einem Empfänger auch der Betriebsmodus "Antennendiversity" vorgesehen werden. Die Umschaltung kann absolut sein oder geräteseitig mit der aktuellen Empfangssituation bewertet werden. Bei guten Empfangssituationen können so mehrere TMC-Sender gescannt werden.

Die Erfindung wird nachfolgend an Hand der beigefügten Zeichnungen beispielhaft näher erläutert. Es zeigen:
Figur 1 - Blockdiagramm eines Rundfunkempfängers mit zwei Empfängern und einer ersten Ausführungsform der erfindungsgemäßen Schalteinheit;
Figur 2 - Blockdiagramm eines Rundfunkempfängers mit einer zweiten Ausführungsform der erfindungsgemäßen Schalteinheit.
Figur 3 - Blockdiagramm eines Rundfunkempfängers mit einer dritten Ausführungsform der erfindungsgemäßen Schalteinheit;
Figur 4 - Blockdiagramm eines Rundfunkempfängers mit einer vierten Ausführungsform der erfindungsgemäßen Schalteinheit;
Figur 5 - Blockdiagramm eines Rundfunkempfängers mit einer fünften Ausführungsform der erfindungsgemäßen Schalteinheit;
Figur 6 - Blockdiagramm eines Rundfunkempfängers mit einer sechsten Ausführungsform der erfindungsgemäßen Schalteinheit;
Figur 7 - Blockdiagramm einer siebten Ausführungsform der erfindungsgemäßen Schalteinheit mit einer Anzahl von Phasenschiebern und Addierern.

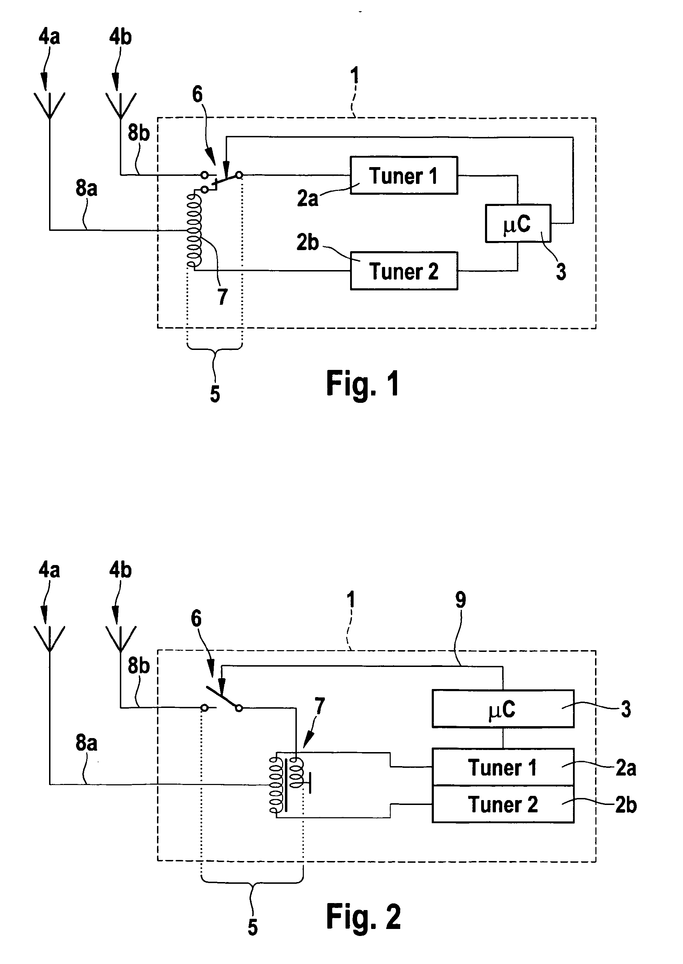

Die Figur 1 lässt einen Rundfunkempfänger 1 mit einem ersten Empfänger 2a und einem zweiten Empfänger 2b erkennen. Die Empfänger 2a, 2b sind an einen Mikrocontroller 3 angeschlossen, der im übrigen auch zur Steuerung des Rundfunkempfänger 1 in bekannter Weise genutzt wird. Weiterhin ist eine erste Antenne 4a und eine zweite Antenne 4b vorhanden.

Gemäß der dargestellten ersten Ausführungsform ist eine Schalteinheit 5 vorgesehen, die einen Schalter 6 und einen Combiner 7 hat, um beide Empfänger 4a, 4b mit dem gleichen Antennensignal zu versorgen, wenn der Schalter 6 auf den Combiner 7 gelegt ist. Der Combiner 7 kann beispielsweise ein induktiv ausgeführter Splitter sein, bei dem wie dargestellt, ein Zwischen- oder Mittelabgriff der Spule des Combiners 7 an die erste Antenne 4a und die äußeren Enden der Spulenwicklung direkt oder abschaltbar an den ersten bzw. zweiten Empfänger 2a, 2b geschaltet sind.

Wenn der Schalter 6 auf die zweite Antenne 4b gelegt ist, werden die Empfänger 2a, 2b jeweils mit einem aus einer zugeordneten Antenne 4a, 4b empfangenen Antennensignal 8a, 8b versorgt, die zueinander dekorreliert sind.

Die Figur 2 zeigt eine zweite Ausführungsform der Schalteinheit 5, die einen Schalter 6 und einen Combiner 7 (beispielsweise ein induktiver Koppler) hat. Der Combiner 7 arbeitet als Summierstufe, die aus den beiden Antennensignalen 8a, 8b der Antennen 4a, 4b Summensignale mit zwei Phasenbeziehungen ϕ₁ = 0° und ϕ₂ = 180° erzeugen kann. Der Hochfrequenz-Combiner 7 hat eine erste Primärwicklung mit Mitten- bzw. Zwischenabgriff und eine zweite Sekundärwicklung ohne Zusatzabgriff.

Die beiden äußeren Enden der Primärwicklung sind an den ersten und zweiten Empfänger 2a, 2b geschaltet. Die erste Antenne 4a ist mit dem Zwischenabgriff des Combiners 7 verbunden.

Das erste Ende der Sekundärwicklung ist auf Masse gelegt und das zweite Ende der Sekundärwicklung ist mit dem Schalter 6 verbunden, dessen anderer Anschluss mit der zweiten Antenne 4b verbunden ist. Der Schalter 6 wird durch den Mikrocontroller 3 über ein Steuersignal 9 angesteuert.

Wenn der Schalter 6 geschlossen ist, gelangen beide Antennensignale 4a, 4b auf den Combiner 7. Die an den beiden Empfängern 2a, 2b anliegenden Antennensignale sind somit jeweils eine Kombination beider Antennensignale 8a, 8b, wobei die Kombination mit unterschiedlicher Phase ϕ erfolgt. Somit sind die Antennensignale nicht korreliert.

Wenn der Schalter 6 geöffnet ist, gelangt hingegen nur das erste Antennensignal 8a an die Primärwicklung des Combiners 7 und beide Empfänger 2a, 2b erhalten das gleiche Antennensignal. Der offene, hochohmige Eingang des mit dem Schalter 6 verbundenen Endes der Sekundärwicklung des Combiners 7 verhält sich in diesem Falle elektrisch neutral.

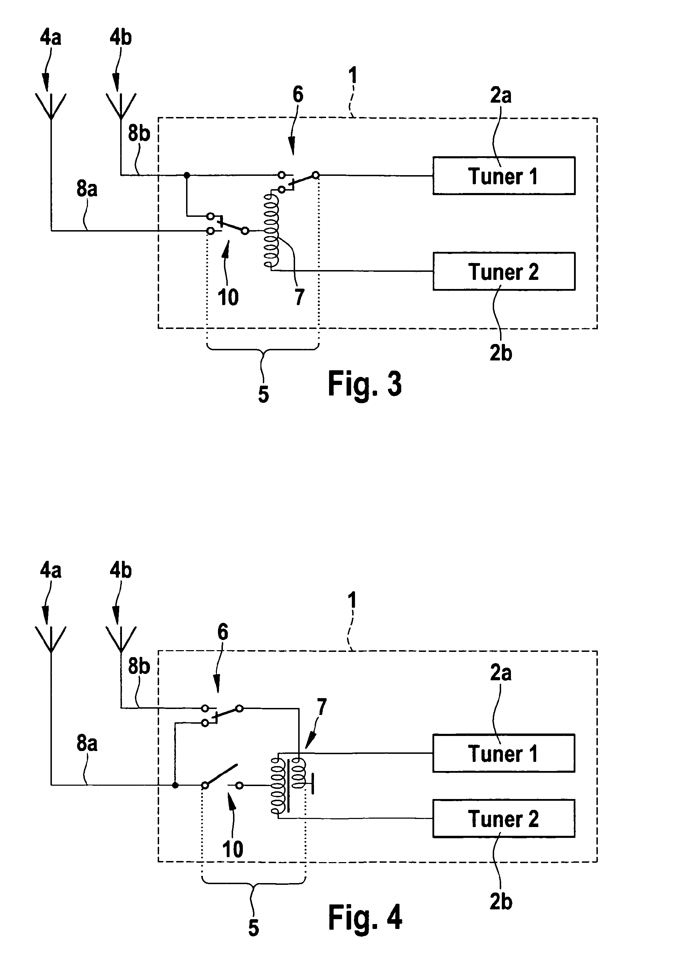

Die Figur 3 lässt einen Rundfunkempfänger 1 mit einer dritten Ausführungsform der erfindungsgemäßen Schalteinheit erkennen, die eine Weiterentwicklung der Schalteinheit aus der Figur 1 ist. In Ergänzung zu der ersten Ausführungsform ist ein zweiter Schalter 10 an dem Zwischenabgriff der Spule des Combiners 7 vorgesehen, mit dem der Zwischenabgriff wahlweise an die erste Antenne 4a oder die zweite Antenne 4b gelegt werden kann.

Wenn der erste und der zweite Schalter 6, 10 horizontal durchverbunden sind, werden beide Empfänger 2a, 2b mit jeweils einem Antennensignal 8a, 8b aus einer zugeordneten Antenne 4a, 4b versorgt. Wenn der erste Schalter 6 in der unteren Position auf den Combiner 7 gelegt ist, erhalten beide Empfänger 2a, 2b das gleiche Antennensignal über den Combiner 7. Mit Hilfe des zweiten Schalters 10 kann nun zwischen dem Antennensignal 8a der ersten Antenne 4a und dem Antennensignal 8b der zweiten Antenne 4b umgeschaltet werden.

Die Figur 4 lässt einen Rundfunkempfänger 1 mit einer vierten Ausführungsform der erfindungsgemäßen Schalteinheit 5 erkennen. Diese ist eine Weiterentwicklung der zweiten Ausführungsform aus der Figur 2. Wiederum ist ein zusätzlicher zweiter Schalter an dem Zwischenabgriff der Primärwicklung des Combiners 7 vorgesehen, mit dem das Antennensignal 8a der ersten Antenne 4a abschaltbar auf die Primärwicklung des Combiners 7 gelegt werden kann. Der erste Schalter 6 ist als Umschalter ausgebildet, um wahlweise die Sekundärwicklung des Combiners 7 mit dem Antennensignal 8a, 8b der ersten Antenne 4a oder der zweiten Antenne 4b zu versorgen.

Der Combiner ist als Summierstufe betrieben, um aus den Antennensignalen 8a, 8b der ersten und zweiten Antenne 4a, 4b Summensignale mit den beiden Phasenbeziehungen ϕ₁=0° und ϕ₂=180° zu erzeugen.

Wenn der erste und zweite Schalter 6, 10 horizontal durchverbunden sind, stehen beiden Empfängern 2a, 2b unkorrelierte Eingangssignale zur Verfiigung, die sich jeweils aus den zwei mit unterschiedlichen komplexen Koeffizienten multiplizierten Antennensignalen 8a, 8b der ersten und zweiten Antenne 4a, 4b zusammensetzen. D. h., dass in einem Fall die beiden Antennensignale 8a, 8b der ersten und zweiten Antenne 4a, 4b phasengleich und im zweiten Fall gegenphasig addiert werden.

Wenn der zweite Schalter 10 hingegen geöffnet ist, werden beide Empfänger 2a, 2b mit dem gleichen Antennensignal 8a, 8b versorgt. Durch Betätigen des Schalters 6 kann zwischen den Antennensignalen 8a, 8b der ersten und zweiten Antenne 4a, 4b umgeschaltet werden.

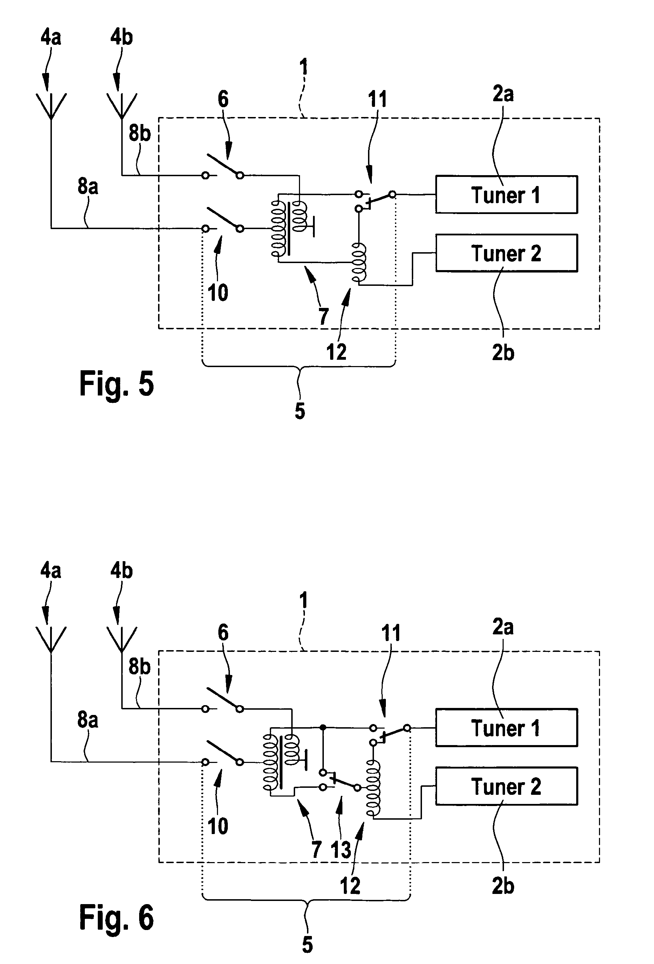

Die Figur 5 lässt eine fünfte Ausführungsform der Schalteinheit 5 in Weiterbildung der in der Figur 4 gezeigten Ausführungsform erkennen. Der erste Schalter 6 ist hierbei allerdings nicht als Umschalter, sondern lediglich als Ein-/Aus-Schalter zur Verbindung der Sekundärwicklung mit der zweiten Antenne 4b ausgebildet. Zwischen dem Combiner 7 und den Empfängern 2a, 2b ist ein dritter Schalter 11 und ein Signalsplitter 12 installiert. Der dritte Schalter 11 kann wahlweise mit einem Ende der Primärwicklung des Combiners 7 oder einem Ende der Wicklung des Signalsplitters 12 verbunden werden und ist an den ersten Empfänger 2a geschaltet. Ein Zwischenabgriff des Signalsplitters 12 ist mit dem anderen Ende der Primärwicklung des Combiners 7 und das andere Ende des Signalsplitters 12 mit dem zweiten Empfänger 2b verbunden.

Wenn die beiden Empfänger 2a, 2b jeweils mit einem Eingangssignal versorgt werden sollen, das von dem jeweils anderen unkorreliert ist, sind alle Schalter 6, 10, 11 in horizontaler Stellung. In dem zweiten Fall, wenn die ersten und zweiten Schalter 6, 10 in horizontaler Stellung sind, kann durch Umschalten des dritten Schalters 11 auf den Signalsplitter 12 der erste Empfänger 2a mit dem gleichen Eingangssignal wie der zweite Empfänger 2b versorgt werden. Durch Öffnen eines der ersten oder zweiten Schalter 6, 10, während der andere Schalter 6, 10 geschlossen ist, können die beiden Empfänger 2a, 2b mit einem Eingangssignal verbunden werden, das für beide Empfänger 2a, 2b gleich ist. In allen Fällen besteht das Eingangssignal der Empfänger 2a, 2b aus einem der Antennensignale 8a, 8b oder der phasenbewerteten Überlagerung beider Antennensignale.

Die Figur 6 lässt eine sechste Ausführungsform der Schalteinheit 5 in Weiterbildung der in der Figur 5 gezeigten fünften Ausführungsform erkennen. Es ist ein vierter Schalter 13 als Umschalter zwischen dem Zwischenabgriff des Signalsplitters 12 und wahlweise dem ersten oder zweiten Ende der Primärwicklung des Combiners 7 vorgesehen. Mit diesem vierter Schalter 13 kann zwischen den beiden Ausgängen des Combiners 7 umgeschaltet werden, so dass sich ein weiters Antennensignal ergibt, das alternativ auf die Empfänger 2a, 2b geschaltet werden kann.

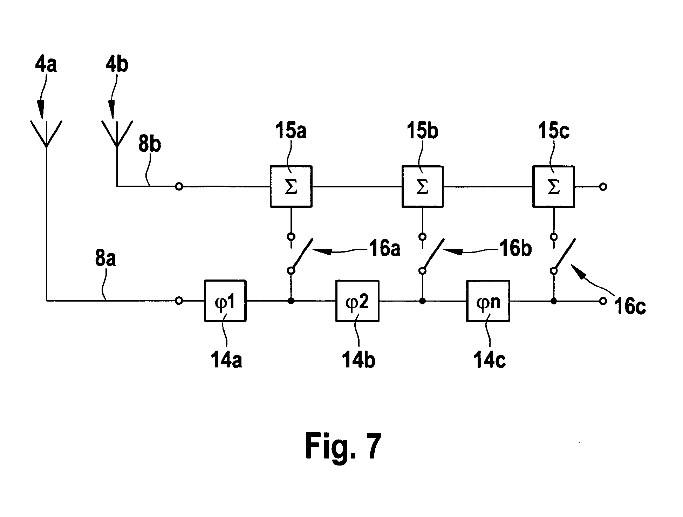

Die Figur 7 lässt eine siebte Ausführungsform der Schalteinheit 5 mit einer Anzahl n von Phasenschiebern 14a, 14b, 14c zur Verschiebung der Phase eines Antennenausgangssignals um die Phase ϕ₁, ϕ₂, ..., ϕₙ und einer entsprechenden Anzahl von Addieren 15a, 15b, 15c erkennen. Die Phasenschieber 14a, 14b, 14c sind hintereinander jeweils in den Pfad einer ersten Antenne 4a gelegt, während die Addierer 15 hintereinander in den Pfad einer zweiten Antenne 4b angeordnet sind. Der Ausgang eines Phasenschiebers ist jeweils wahlweise mit einem Schalter 16a, 16b, 16c mit mindestens einem zugeordneten Addierer 15a, 15b, 15c verbunden, um das phasenverschobene Antennensignal 8a der ersten Antenne 4a mit dem Antennensignal 8b der zweiten Antenne 4b zu überlagern.

Es ist offensichtlich, dass diese Schaltungsanordnung auf ein System mit mehr als zwei Empfängern 2a, 2b und mehr als zwei Antennen 4a, 4b zur komplexen Linearkombination von mehr als zwei Antennensignalen 8 erweitert werden kann.

## Patentansprüche

1. Rundfunkempfänger, insbesondere Autoradio, mit mindestens zwei Antennen (4a, 4b) und mindestens zwei Empfängern (2a, 2b) für Antennensignale (8a, 8b); wobei
a) der Rundfunkempfänger (1) wahlweise zwischen einem ersten Betriebsmodus und einem zweiten Betriebsmodus umschaltbar ist,
b) in dem ersten Betriebsmodus mindestens ein erster Empfänger (2a, 2b) mittels einer Schalteinheit (5) wahlweise zwischen dekorrelierten Antennensignalen umschaltbar ist, **dadurch gekennzeichnet,**
c) **dass** in dem zweiten Betriebsmodus an mindestens zwei Empfängern (2a, 2b) voneinander dekorrelierte Antennensignale (8a, 8b) für einen Empfang mit digital virtuell gerichteten Antennen oder Phasendiversityempang anlegbar sind.

2. Rundfunkempfänger (1) nach Anspruch 1, **dadurch gekennzeichnet, dass** die Eingangssignale der Empfänger (2a, 2b) bei den möglichen Schalterzuständen der Schalteinheit (5) einem Antennensignal, einem gesplitteten Antennensignal oder der Summe in der Phase unterschiedlich verschobener Antennensignale entsprechen.

3. Rundfunkempfänger (1) nach Anspruch 1 oder 2, **gekennzeichnet durch** einen Hochfrequenz-Combiner (7) zur komplexen Überlagerung von Antennensignalen (8a, 8b), wobei die Schalteinheit (5) mit den mindestens zwei Antennen (4a, 4b), dem Combiner (7) und den mindestens zwei Empfängern (2a, 2b) so verbunden ist, dass die Empfänger (2a, 2b) wahlweise mit aus mindestens zwei Antennensignalen (8a, 8b) gebildeten korrelierten überlagerten oder dekorrelierten Antennensignalen versorgt werden.

4. Rundfunkempfänger (1) nach Anspruch 1 oder 2, **dadurch gekennzeichnet, dass** die Schalteinheit (5) einen Hochfrequenz-Combiner (7) mit einer Primärwicklung, deren Wicklungsenden an die Empfänger (2a, 2b) geschaltet sind, und einer Sekundärwicklung hat, wobei eine der Antennen (4a) mit einem Zwischenabgriff der Primärwicklung verbunden ist und eine andere Antenne (4b) mit einem ersten Schalter (6) abschaltbar mit einer Sekundärwicklung verbunden und die Sekundärwicklung auf Massepotential gelegt ist.

5. Rundfunkempfänger (1) nach Anspruch 4, **dadurch gekennzeichnet, dass** der erste Schalter (6) ein Umschalter ist, um wahlweise die erste oder zweite Antenne (4a, 4b) mit der Sekundärwicklung des Hochfrequenz-Combiners (7) zu verbinden.

6. Rundfunkempfänger (1) nach einem der Ansprüche 4 oder 5, **gekennzeichnet durch** einen zweiten Schalter (10) zwischen der ersten Antenne (4a) und dem Zwischenabgriff der Primärwicklung des Hochfrequenz-Combiners (7).

7. Rundfunkempfänger (1) nach Anspruch 6, **gekennzeichnet durch** einen mit einem dritten Schalter (11) abschaltbar an die Eingänge der Empfänger (2a, 2b) angeschlossenen Signalteiler (12) mit einem an ein erstes Wicklungsende der Primärwicklung des Hochfrequenz-Combiners (7) geführten Zwischenabgriff, wobei der dritte Schalter (11) ein Umschalter ist, um wahlweise das zweite Wicklungsende der Primärwicklung des Hochfrequenz-Combiners (7) oder den Signalteiler (12) mit einem der Empfänger (2a, 2b) zu verbinden.

8. Rundfunkempfänger (1) nach Anspruch 7, **gekennzeichnet durch** einen vierten Schalter (13) an dem Zwischenabgriffdes Signalteilers, um wahlweise das erste Wicklungsende oder das zweite Wicklungsende der Primärwicklung des Hochfrequenz-Combiners (7) mit dem Zwischenabgriff des Signalteilers (12) zu verbinden.

9. Rundfunkempfänger (1) nach Anspruch 1, **gekennzeichnet durch** einen zweiten Umschalter (10) an einem Zwischenabgriff des Combiners (7), wobei der Combiner (7) mit einem zweiten Wicklungsende direkt an einem zweiten Empfänger (2b) und mit einem ersten Wicklungsende mit einem ersten Umschalter (6) abschaltbar an einen ersten Empfänger (2a) angeschlossen ist, wobei der zweite Umschalter (10) zum wahlweisen Verbinden des Zwischenabgriffs mit der ersten oder zweiten Antenne (4a, 4b) und der erste Umschalter (6) zum wahlweisen Verbinden des ersten Empfängers (2a) mit dem Signalteiler oder einer der Antennen (4a, 4b) verschaltet ist.

10. Rundfunkempfänger (1) nach Anspruch 1, **dadurch gekennzeichnet, dass** die Schalteinheit (5) von mindestens eine der Antennen (4a, 4b) eine Mehrzahl von hintereinander geschalteten Phasenschiebern (14) zur Verschiebung der Phase (ϕ) des Antennensignals (8a, 8b) der zugeordneten Antenne (4a, 4b) hat und eine Mehrzahl von Addierern (15) und Schaltern (16) vorgesehen sind, um wahlweise phasenverschobenen Antennensignale (8a, 8b) einer Antenne (4a, 4b) mit Antennensignalen (8a, 8b) einer anderen Antenne (4a, 4b) zu überlagern.

11. Rundfunkempfänger (1) nach einem der vorhergehenden Ansprüche, **dadurch gekennzeichnet, dass** die Schalteinheit (5) zur Bildung von Summenantennensignalen mit den Phasenbeziehungen von ϕ₁ = 0° und ϕ₂ = 180° aus den Antennensignalen (8a, 8b) einer ersten und zweiten Antenne (4a, 4b) ausgebildet ist.

12. Rundfunkempfänger (1) nach einem der vorhergehenden Ansprüche, **dadurch gekennzeichnet, dass** mindestens einer der Empfänger (2a, 2b) zur Bewertung von verfügbaren Antennensignalen (8a, 8b) auswählbarer Antennen (4a, 4b), insbesondere von der Leistung oder Signalqualität, in freien Zeitschlitzen ausgebildet ist, in denen kein anderweitiger Empfang durch den bewerteten Empfänger (2a, 2b) erforderlich ist.

13. Rundfunkempfänger (1) nach einem der vorhergehenden An-sprüche, **gekennzeichnet durch** einen Mikrocontroller zur Steuerung der Schalteinheit (5).

14. Rundfunkempfänger (1) nach einem der vorhergehenden Ansprüche, **dadurch gekennzeichnet, dass** der Rundfunkempfänger (1) zwischen einem DDA-Betriebsmodus, in dem von den Empfängern (2a, 2b) der gleiche Empfangspfad genutzt wird, und einem Hintergrundbetriebsmodus, in dem von den Empfängern (2a, 2b) voneinander unterschiedliche Empfangspfade genutzt werden, umschaltbar ist.

15. Rundfunkempfänger (1) nach einem der vorhergehenden Ansprüche, **dadurch gekennzeichnet, dass** der Rundfunkempfänger (1) eine Schalteinheit (5) zwischen den Antennen (4a, 4b) und den Empfängern (2a, 2b) hat, die zwischen zwei Betriebsmodi nach Bedarf automatisch oder auch durch den Benutzer gesteuert umschalten, wobei in einem ersten Betriebsmodus mindestens zwei Empfänger (2a, 2b) unterschiedliche Modulationen auf verschiedenen Frequenzen empfangen und das Eingangssignal mindestens eines Empfängers zwischen mindestens zwei zur Verfügung stehenden Antennensignalen umgeschaltet werden kann und in einem zweiten Betriebsmodus mindestens zwei Empfänger (2a, 2b) die gleiche Modulation empfangen, wobei die empfangenen Antennensignale zur Empfangsverbesserung mit komplexen Koeffizienten in der analogen oder digitalen Ebene multipliziert, anschließend addiert und weiter verarbeitet werden.

16. Rundfunkempfänger (1) nach einem der vorhergehenden Ansprüche, **dadurch gekennzeichnet, dass** reziproke Bauteile in ihrer Anschlussrichtung entsprechend der Reziprozität verdreht sind.

## Claims

1. Broadcast radio receiver, particularly a car radio, having at least two antennas (4a, 4b) and at least two receivers (2a, 2b) for antenna signals (8a, 8b), wherein
a) the broadcast radio receiver (1) can be changed over selectively between a first mode of operation and a second mode of operation,
b) in the first mode of operation at least one first receiver (2a, 2b) can be changed over selectively between decorrelated antenna signals by means of a switching unit (5), **characterized**
c) **in that** in the second mode of operation it is possible for antenna signals (8a, 8b) decorrelated from one another to be applied to at least two receivers (2a, 2b) for reception with digitally virtually oriented antennas or phase diversity reception.

2. Broadcast radio receiver (1) according to Claim 1, **characterized in that** the input signals for the receivers (2a, 2b) correspond to an antenna signal, a split antenna signal or the sum of differently phase-shifted antenna signals in the possible switch states of the switching unit (5).

3. Broadcast radio receiver (1) according to Claim 1 or 2, **characterized by** a radio-frequency combiner (7) for the complex superimposition of antenna signals (8a, 8b), wherein the switching unit (5) is connected to the at least two antennas (4a, 4b), the combiner (7) and the at least two receivers (2a, 2b) such that the receivers (2a, 2b) are supplied selectively with correlated superimposed or decorrelated antenna signals formed from at least two antenna signals (8a, 8b).

4. Broadcast radio receiver (1) according to Claim 1 or 2, **characterized in that** the switching unit (5) has a radio-frequency combiner (7) with a primary winding, the winding ends of which are connected to the receivers (2a, 2b), and a secondary winding, wherein one of the antennas (4a) is connected to an intermediate tap on the primary winding and another antenna (4b) is connected to a secondary winding so as to be able to be disconnected by means of a first switch (6), and the secondary winding is connected to earth potentials.

5. Broadcast radio receiver (1) according to Claim 4, **characterized in that** the first switch (6) is a changeover switch in order to selectively connect the first or the second antenna (4a, 4b) to the secondary winding of the radio-frequency combiner (7).

6. Broadcast radio receiver (1) according to one of Claims 4 and 5, **characterized by** a second switch (10) between the first antenna (4a) and the intermediate tap on the primary winding of the radio-frequency combiner (7).

7. Broadcast radio receiver (1) according to Claim 6, **characterized by** a signal splitter (12), connected to the inputs of the receivers (2a, 2b) so as to be able to be disconnected by means of a third switch (11), with an intermediate tap routed to a first winding end of the primary winding of the radio-frequency combiner (7), wherein the third switch (11) is a changeover switch in order to selectively connect the second winding end of the primary winding of the radio-frequency combiner (7) or the signal splitter (12) to one of the receivers (2a, 2b).

8. Broadcast radio receiver (1) according to Claim 7, **characterized by** a fourth switch (13) at the intermediate tap of the signal splitter in order to selectively connect the first winding end or the second winding end of the primary winding of the radio-frequency combiner (7) to the intermediate tap of the signal splitter (12).

9. Broadcast radio receiver (1) according to Claim 1, **characterized by** a second changeover switch (10) at an intermediate tap on the combiner (7), wherein the combiner (7) has a second winding end connected directly to a second receiver (2b) and has a first winding end connected to a first receiver (2a) so as to be able to be disconnected by means of a first changeover switch (6), wherein the second changeover switch (10) is connected up for the purpose of selectively connecting the intermediate tap to the first or second antenna (4a, 4b), and the first changeover switch (6) is connected up for the purpose of selectively connecting the first receiver (2a) to the signal splitter or to one of the antennas (4a, 4b).

10. Broadcast radio receiver (1) according to Claim 1, **characterized in that** the switching unit (5) of at least one of the antennas (4a, 4b) has a plurality of series-connected phase shifters (14) for the purpose of shifting the phase (ϕ) of the antenna signal (8a, 8b) from the associated antenna (4a, 4b), and a plurality of adders (15) and switches (16) are provided in order to selectively superimpose phase-shifted antenna signals (8a, 8b) from one antenna (4a, 4b) with antenna signals (8a, 8b) from another antenna (4a, 4b).

11. Broadcast radio receiver (1) according to one of the preceding claims, **characterized in that** the switching unit (5) is designed to form summed antenna signals with the phase relationships of ϕ₁ = 0° and ϕ₂ = 180° from the antenna signals (8a, 8b) from a first and a second antenna (4a, 4b).

12. Broadcast radio receiver (1) according to one of the preceding claims, **characterized in that** at least one of the receivers (2a, 2b) is designed to assess available antenna signals (8a, 8b) from selectable antennas (4a, 4b), particularly the power or signal quality, in free time slots in which no other reception by the assessed receiver (2a, 2b) is required.

13. Broadcast radio receiver (1) according to one of the preceding claims, **characterized by** a microcontroller for controlling the switching unit (5).

14. Broadcast radio receiver (1) according to one of the preceding claims, **characterized in that** the broadcast radio receiver (1) can be changed over between a DDA mode of operation, in which the receivers (2a, 2b) use the same reception path, and a background mode of operation, in which the receivers (2a, 2b) use different reception paths.

15. Broadcast radio receiver (1) according to one of the preceding claims, **characterized in that** the broadcast radio receiver (1) has a switching unit (5) between the antennas (4a, 4b) and the receivers (2a, 2b) which change over between two modes of operation as required automatically or else under the control of the user, wherein in a first mode of operation at least two receivers (2a, 2b) receive different modulations on different frequencies and the input signal for at least one receiver can be changed over between at least two available antenna signals, and in a second mode of operation at least two receivers (2a, 2b) receive the same modulation, with the received antenna signals being multiplied by complex coefficients at the analogue or digital level, subsequently added and processed further in order to improve reception.

16. Broadcast radio receiver (1) according to one of the preceding claims, **characterized in that** reciprocal components have their direction of connection rotated according to reciprocity.

## Revendications

1. Récepteur de radiodiffusion, notamment autoradio, comprenant au moins deux antennes (4a, 4b) et au moins deux récepteurs (2a, 2b) pour des signaux d'antenne (8a, 8b),
a) le récepteur de radiodiffusion (1) pouvant être permuté au choix entre un premier mode de fonctionnement et un deuxième mode de fonctionnement,
b) dans le premier mode de fonctionnement, au moins un premier récepteur (2a, 2b) pouvant être permuté au choix au moyen d'une unité de commutation (5) entre des signaux d'antenne décorrélés, **caractérisé en ce**
c) **que** dans le deuxième mode de fonctionnement, les signaux d'antenne (8a, 8b) décorrélés les uns des autres peuvent être appliqués à au moins deux récepteurs (2a, 2b) pour une réception avec des antennes à alignement numérique ou pour une réception en diversité de phase.

2. Récepteur de radiodiffusion (1) selon la revendication 1, **caractérisé en ce que** les signaux d'entrée des récepteurs (2a, 2b) avec les états de commutation possibles de l'unité de commutation (5) correspondent à un signal d'antenne, un signal d'antenne fractionné ou la somme de signaux d'antennes à déphasages différents.

3. Récepteur de radiodiffusion (1) selon la revendication 1 ou 2, **caractérisé par** un combineur à haute fréquence (7) pour la superposition complexe de signaux d'antenne (8a, 8b), l'unité de commutation (5) étant reliée avec les au moins deux antennes (4a, 4b), le combineur (7) et les au moins deux récepteurs (2a, 2b) de telle sorte que les récepteurs (2a, 2b) sont alimentés au choix avec des signaux d'antenne corrélés par superposition ou décorrélés formés à partir d'au moins deux signaux d'antenne (8a, 8b).

4. Récepteur de radiodiffusion (1) selon la revendication 1 ou 2, **caractérisé en ce que** l'unité de commutation (5) comprend un combineur à haute fréquence (7) avec un enroulement primaire dont les extrémités d'enroulement sont connectées aux récepteurs (2a, 2b) et un enroulement secondaire, l'une des antennes (4a) étant reliée avec une prise intermédiaire de l'enroulement primaire et une autre antenne (4b) étant reliée avec un enroulement secondaire de manière à pouvoir être déconnectée par un premier commutateur (6) et l'enroulement secondaire est relié au potentiel de la masse.

5. Récepteur de radiodiffusion (1) selon la revendication 4, **caractérisé en ce que** le premier commutateur (6) est un inverseur pour relier, au choix, la première ou la deuxième antenne (4a, 4b) avec l'enroulement secondaire du combineur à haute fréquence (7).

6. Récepteur de radiodiffusion (1) selon l'une des revendications 4 ou 5, **caractérisé par** un deuxième commutateur (10) entre la première antenne (4a) et la prise intermédiaire de l'enroulement primaire du combineur à haute fréquence (7).

7. Récepteur de radiodiffusion (1) selon la revendication 6, **caractérisé par** un diviseur de signal (12) raccordé aux entrées des récepteurs (2a, 2b) de manière à pouvoir être déconnecté par un troisième commutateur (11), comprenant une prise intermédiaire qui mène à une première extrémité d'enroulement de l'enroulement primaire du combineur à haute fréquence (7), le troisième commutateur (11) étant un inverseur pour relier, au choix, la deuxième extrémité d'enroulement de l'enroulement primaire du combineur à haute fréquence (7) ou le diviseur de signal (12) avec l'un des récepteurs (2a, 2b).

8. Récepteur de radiodiffusion (1) selon la revendication 7, **caractérisé par** un quatrième commutateur (13) sur la prise intermédiaire du diviseur de signal pour relier, au choix, la première extrémité d'enroulement ou la deuxième extrémité d'enroulement de l'enroulement primaire du combineur à haute fréquence (7) avec la prise intermédiaire du diviseur de signal (12).

9. Récepteur de radiodiffusion (1) selon la revendication 1, **caractérisé par** un deuxième inverseur (10) sur une prise intermédiaire du combineur (7), le combineur (7) étant raccordé avec une deuxième extrémité d'enroulement directement à un deuxième récepteur (2b) et avec une première extrémité d'enroulement à un premier récepteur (2a) de manière à pouvoir être déconnecté par un premier inverseur (6), le deuxième inverseur (10) étant connecté de manière à relier, au choix, la prise intermédiaire avec la première ou la deuxième antenne (4a, 4b) et le premier inverseur (6) pour relier, au choix, le premier récepteur (2a) avec le diviseur de signal ou l'une des antennes (4a, 4b).

10. Récepteur de radiodiffusion (1) selon la revendication 1, **caractérisé en ce que** l'unité de commutation (5) d'au moins l'une des antennes (4a, 4b) comprend une pluralité de déphaseurs (14) branchés les uns après les autres pour décaler la phase (ϕ) du signal d'antenne (8a, 8b) de l'antenne associée (4a, 4b) et une pluralité d'additionneurs (15) et de commutateurs (16) sont prévus pour superposer, au choix, des signaux d'antenne déphasés (8a, 8b) d'une antenne (4a, 4b) avec les signaux d'antenne (8a, 8b) d'une autre antenne (4a, 4b).

11. Récepteur de radiodiffusion (1) selon l'une des revendications précédentes, **caractérisé en ce que** l'unité de commutation (5) est configurée pour calculer des signaux d'antenne totaux avec les déphasages ϕ₁ = 0° et ϕ₂ = 180° des signaux d'antenne (8a, 8b) d'une première et d'une deuxième antenne (4a, 4b).

12. Récepteur de radiodiffusion (1) selon l'une des revendications précédentes, **caractérisé en ce qu'**au moins l'un des récepteurs (2a, 2b) est configuré pour évaluer les signaux d'antenne (8a, 8b) disponibles d'antennes (4a, 4b) pouvant être sélectionnées, notamment de la puissance ou de la qualité du signal dans des créneaux temporels libres dans lesquels aucune autre réception n'est requise par le récepteur (2a, 2b) évalué.

13. Récepteur de radiodiffusion (1) selon l'une des revendications précédentes, **caractérisé par** un microcontrôleur pour commander l'unité de commutation (5).

14. Récepteur de radiodiffusion (1) selon l'une des revendications précédentes, **caractérisé en ce que** le récepteur de radiodiffusion (1) peut être permuté entre un mode de fonctionnement DDA, dans lequel les récepteurs (2a, 2b) emploient le même trajet de réception, et un mode de fonctionnement en arrière-plan dans lequel les récepteurs (2a, 2b) emploient des trajets de réception différents l'un de l'autre.

15. Récepteur de radiodiffusion (1) selon l'une des revendications précédentes, **caractérisé en ce que** le récepteur de radiodiffusion (1) comprend une unité de commutation (5) entre les antennes (4a, 4b) et les récepteurs (2a, 2b), lesquels permutent entre deux modes de fonctionnement automatiquement en fonction du besoin ou aussi sur commande par l'utilisateur, au moins deux récepteurs (2a, 2b) recevant des modulations différentes à des fréquences différentes dans un premier mode de fonctionnement et le signal d'entrée d'au moins un récepteur pouvant alors être permuté entre au moins deux signaux d'antenne disponibles, et dans un deuxième mode de fonctionnement au moins deux récepteurs (2a, 2b) recevant la même modulation, les signaux d'antenne reçus étant multipliés par des coefficients complexes dans le plan analogique ou numérique, ensuite additionnés puis soumis à un traitement postérieur afin d'améliorer la réception.

16. Récepteur de radiodiffusion (1) selon l'une des revendications précédentes, **caractérisé en ce que** les composants réciproques sont tournés dans leur sens de raccordement en fonction de la réciprocité.
